# EUROPEAN PATENT APPLICATION

(11) **EP 1 669 184 A1**
(43) Date of publication of application: **14.06.2006**
(21) Application number: 04724841.4
(22) Date of filing: 31.03.2004
(51) Int. Cl.: B29C 45/38, B29C 45/26, B29L 17/00

(54) **METALLIC MOLD DEVICE, MOLDED ARTICLE, METHOD AND MACHINE FOR MOLDING THE ARTICLE**

(71) Applicant: SUMITOMO HEAVY INDUSTRIES, LTD., Shinagawa-ku, Tokyo 141-8686 (JP); SEIKOH GIKEN Co., Ltd., Matsudo-shi, Chiba 2702214 (JP)
(72) Inventor: INADA, Yuichi c/o Sumitomo Heavy Industries, Ltd., Shinagawa-ku, Tokyo 141-8686 (JP); SAKAMOTO, Yasuyoshi c/o Seikoh Giken Co., Ltd., Matsudo-shi, Chiba 270-2214 (JP); HIKI, Katsuyuki c/o Seikoh Giken Co., Ltd., Matsudo-shi, Chiba 270-2214 (JP)
(74) Representative: Geyer, Ulrich F.
(86) International application number: PCT/JP2004/004742
(87) International publication number: WO 2005/099993

(57) **Abstract**

An object is to provide a mold apparatus which can prevent inclination of a machining member to thereby improve quality of molded products. The mold apparatus includes a first mold unit; a second mold unit; a sprue bush (24) disposed in one of the first and second mold units and having a sprue (26) for charging a molding material into a cavity space (C); a machining member disposed in the other of the first and second mold units in such a manner that the machining member can be advanced and retracted, the machining member performing a predetermined machining for a prototype of a molded product when the machining member is advanced; and a bush (47) disposed radially outward of the machining member to surround the machining member and having a flow passage (55) which is formed in a front end portion thereof and through which a temperature control medium flows. Since the flow passage (55) through which a temperature control medium flows is formed in a front end portion of the bush (47), a temperature control flow passage is not required to be formed in the front end portion of the machining member. Accordingly, since a support member can be disposed at a location offset toward the front end of the bush (27), generation of inclination of the machining member can be prevented.

## Description

### TECHNICAL FIELD

The present invention relates to a mold apparatus, a molded product, a method of molding the same, and a molding machine.

### BACKGROUND ART

Conventionally, in a molding machine, such as an injection molding machine, for molding a product such as a disc substrate, resin melted within a heating cylinder is charged into a cavity space in a disc-molding mold, and is then cooled and hardened in the cavity space so as to obtain a disc substrate.

For such a molding process, the above-mentioned injection molding machine includes the disc-molding mold, serving as a mold apparatus, and consisting of a stationary mold assembly and a movable mold assembly; an injection apparatus for charging resin into a cavity space; and a mold clamp apparatus for bringing the movable mold assembly into contact with the stationary mold assembly and separating the movable mold assembly from the stationary mold assembly. The mold clamp apparatus is operated so as to advance and retract the movable mold assembly to thereby close, clamp, and open the disc-molding mold. When the mold is clamped, a cavity space is formed between a mirror-surface disc of the stationary mold assembly and a mirror-surface disc of the movable mold assembly.

The injection apparatus includes a heating cylinder; an injection nozzle attached to a front end of the heating cylinder; and a screw disposed in the heating cylinder so that the screw can rotate and can advance and retract.

In a metering step, the screw is rotated, whereby resin is melted and accumulated in front of the screw, and the screw is retracted accordingly. During this period, the disc-molding mold is closed and clamped. Subsequently, in an injection step, the screw is advanced, whereby the resin accumulated in front of the screw is injected from the injection nozzle and charged into the cavity space. In a cooling step, the resin in the cavity space is cooled, and hole punching is performed, whereby a disc substrate is completed. Subsequently, the mold is opened, and the disc substrate is removed.

A stamper is attached to the stationary mirror-surface disc. Upon charging of the resin into the cavity space, a fine pattern of pits formed on the stamper is transferred to the resin, whereby an uneven surface is formed as an information surface of the disc substrate.

In the stationary mold assembly, a sprue is formed in a sprue bush, and a front end of the sprue forms a gate serving as an inlet of resin to be charged into the cavity space. Resin passes through the sprue and the gate, and enters the cavity space, where the resin flows radially outward. A concave portion serving as a die is formed at a front end of the sprue bush.

Meanwhile, a cut punch serving as a machining member is disposed in the movable mold assembly in such a manner that the cut punch can advance and retract. The above-described hole punching can be performed through an operation of advancing the cut punch so that its front end enters the die.

Incidentally, resin having entered the cavity space via the gate first comes into contact with the front end of the cut punch, the cut punch is easily heated, and its temperature increases. When the dimension of the cut punch changes with the temperature of the cut punch, the hole punching for disc substrates becomes inconsistent, with a resultant decrease in the quality of the disc substrates.

In order to cope with the above problem, a temperature control flow passage is formed in the cut punch in the vicinity of the front end thereof; and a temperature control medium is supplied to the flow passage so as to cool the cut punch. However, since formation of the flow passage requires increasing the diameter of the cut punch in the vicinity of the front end thereof, machining of the cut punch becomes complex.

Further, a floating punch is disposed on the radially outer side of the cut punch so as to remove a molded disc substrate. The cut punch is supported by the floating punch via a bearing in such a manner that the cut punch can advance and retract. In the case where a flow passage is formed in the cut punch, as described above, since the diameter of the cut punch in the vicinity of the front end thereof increases, disposition of the bearing hear the front end of the cut punch is impossible. Therefore, the bearing is disposed at an intermediate portion or in the vicinity of the proximal end of the cut punch.

Incidentally, the bearing includes a plurality of balls which support the cut punch. Therefore, in a region where the bearing is disposed, the cut punch can be easily advanced and retracted even when the fit between the floating punch and the cut punch becomes tighter. In contrast, in a region near the front end of the cut punch where no bearing is disposed, the cut punch cannot be easily advanced and retracted when the fit between the floating punch and the cut punch becomes tighter. Therefore, in the region near the front end of the cut punch, the fit between the floating punch and the cut punch is made looser. This results in inclination of the cut punch, and a decrease in the quality of disc substrates.

An object of the present invention is to solve the above-mentioned problems in the conventional disc-molding mold and to provide a mold apparatus which can prevent inclination of a machining member to thereby improve quality of molded products, as well as a molded product; a method of molding the same, and a molding machine.

### DISCLOSURE OF THE INVENTION

To achieve the above object, the present invention provides a mold apparatus comprising a first mold unit; a second mold unit; a sprue bush disposed in one of the first and second mold units and having a sprue for charging a molding material into a cavity space; a machining member disposed in the other of the first and second mold units in such a manner that the machining member can be advanced and retracted, the machining member performing a predetermined machining for a prototype of a molded product when the machining member is advanced; and a bush disposed radially outward of the machining member to surround the machining member and having a flow passage which is formed in a front end portion thereof and through which a temperature control medium flows.

In this case, the bush is disposed radially outward of the machining member, and a flow passage through which a temperature control medium flows is formed in a front end portion of the bush. Therefore, a flow passage for circulating the temperature control medium is not required to be formed in the front end portion of the machining member. Accordingly, the diameter of the machining member at the front end portion thereof is not required to increase, whereby machining of the machining member can be simplified. As a result, cost of the mold apparatus can be reduced.

Since a support member can be disposed at a location offset toward the front end of the bush, the fit between the bush and the machining member can be tightened. Therefore, generation of inclination of the machining member can be prevented, whereby no eccentricity is generated in molded products. As a result, quality of molded products can be improved.

In another mold apparatus of the present invention, an annular flow passage through which a temperature control medium flows is formed in a front end portion of the sprue bush.

In this case, since an annular flow passage is formed in a front end portion of the sprue bush, when the machining member is advanced, the front end of the machining member can be cooled.

In another mold apparatus of the present invention, the radial dimension of the flow passage of the sprue bush is greater than an inner diameter of a supply passage for supplying the temperature control medium to the flow passage of the sprue bush.

In this case, a sufficient quantity of the temperature control medium can be supplied to the flow passage of the sprue bush, and the heat capacity of the medium within the flow passage can be increased, whereby the cooling capacity of the sprue bush by the medium can be increased. As a result, when the machining member is advanced, the front end of the machining member can be sufficiently cooled.

In still another mold apparatus of the present invention, the flow passage formed in the front end portion of the bush is an annular flow passage.

In still another mold apparatus of the present invention, a support member is disposed between the machining member and the bush. The support member extends rearward from a position near the flow passage formed in the front end portion of the bush.

In this case, since the support member extends rearward from a position near the flow passage formed in the front end portion of the bush, the fit between the bush and the machining member can be tightened over substantially the entire region of the bush. Accordingly, inclination of the machining member can be prevented, whereby no eccentricity is generated in molded products. As a result, quality of molded products can be improved.

In still another mold apparatus of the present invention, the supply passage for supplying the temperature control medium to the flow passage of the bush is formed along the support member.

In this case, since the supply passage for supplying the temperature control medium to the flow passage of the bush is formed along the support member, the support member can be sufficiently cooled by the medium. Accordingly, the operation of the support member can be stabilized.

In another mold apparatus of the present invention, a discharge passage for discharging a lubricant used for lubricating the support member is formed in the machining member.

In this case, since a discharge passage for discharging a lubricant used for lubricating the support member is formed in the machining member, the lubricant does not adhere to molded products.

The present invention provides a molded product molded by use of a mold apparatus comprising a first mold unit; a second mold unit; a sprue bush disposed in one of the first and second mold units and having a sprue; a machining member disposed in the other of the first and second mold units in such a manner that the machining member can be advanced and retracted; and a bush disposed radially outward of the machining member to surround the machining member and having a flow passage which is formed in a front end portion thereof and through which a temperature control medium flows.

The product is molded through the steps of charging a molding material into a cavity space via the sprue; cooling the molding material so as to form a prototype of the molded product; and advancing the machining member so as to perform a predetermined machining on the prototype of the molded product.

The present invention provides a method of molding a product applied to a mold apparatus comprising a first mold unit; a second mold unit; a sprue bush disposed in one of the first and second mold units and having a sprue; a machining member disposed in the other of the first and second mold units in such a manner that the machining member can be advanced and retracted; and a bush disposed radially outward of the machining member to surround the machining member and having a flow passage which is formed in a front end portion thereof and through which a temperature control medium flows.

The method comprises the steps of charging a molding material into the cavity space via the sprue; cooling the molding material so as to form a prototype of the molded product; and advancing the machining member so as to perform a predetermined machining on the prototype of the molded product.

The present invention provides a molding machine equipped with the mold apparatus as described in any one of claims 1 to 7.

### BRIEF DESCRIPTION OF THE DRAWINGS

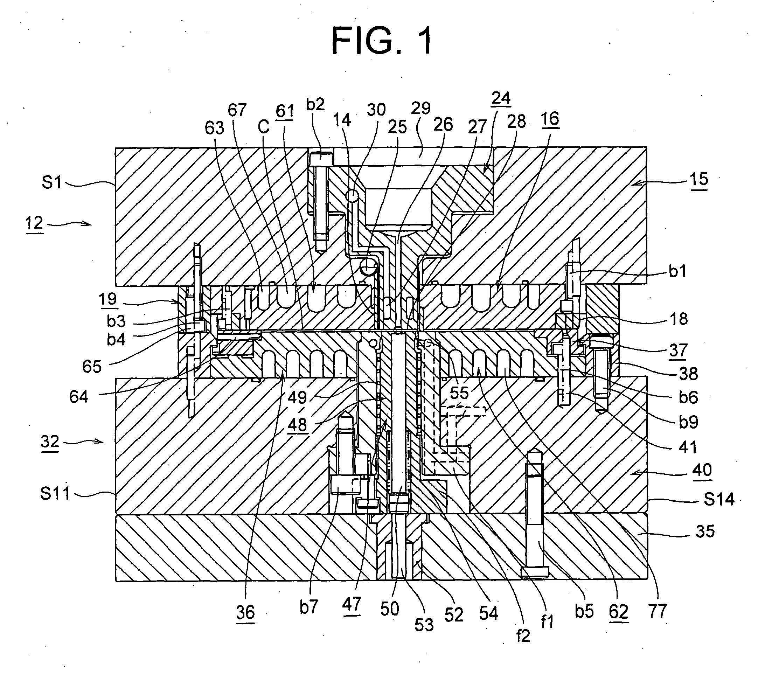

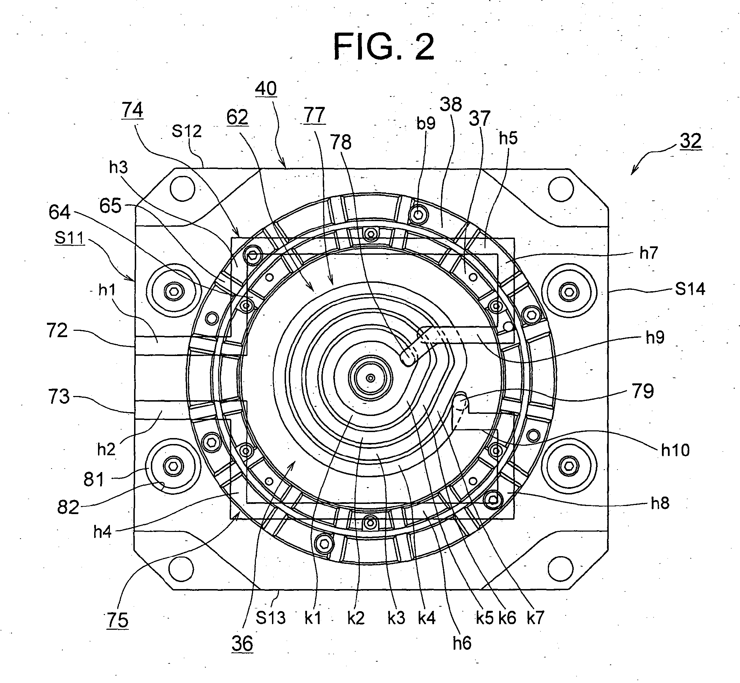

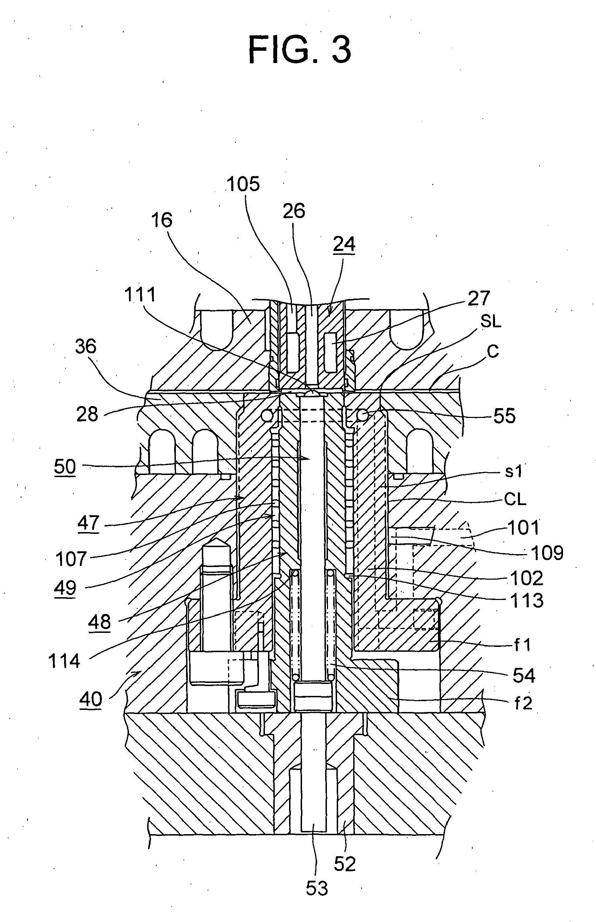

FIG. 1 is a sectional view showing a main portion of a disc-molding mold according to an embodiment of the present invention; FIG. 2 is a front view showing a main portion of a movable mold assembly according to the embodiment of the present invention; and FIG. 3 is an enlarged view showing a main portion of the disc-molding mold according to the embodiment of the present.

### BEST MODE FOR CARRYING OUT THE INVENION

An embodiment of the present invention will next be described in detail with reference to the drawings. Notably, in the embodiment, a disc-molding mold will be described as a mold apparatus.

FIG. 1 is a sectional view showing a main portion of the disc-molding mold according to the embodiment of the present invention; FIG. 2 is a front view showing a main portion of a movable mold assembly according to the embodiment of the present invention; and FIG. 3 is an enlarged view showing a main portion of the disc-molding mold according to the embodiment of the present.

In the drawings, reference numeral 12 denotes a stationary mold assembly that is attached to an unillustrated stationary platen via an unillustrated mount plate and by use of unillustrated bolts. The stationary mold assembly 12 is composed of a base plate 15 serving as a first support member; a mirror-surface disc 16 serving as a first disc-shaped member and attached to the base plate 15 by use of bolts b1; and a sprue bush 24 disposed within the base plate 15 to be positioned with respect thereto and attached to the base plate 15 by use of bolts b2. The base plate 15 and the mirror-surface disc 16 constitute a first mold unit.

A concave portion serving as a die 28 is formed at a front end (a lower end in FIG. 1) of the sprue bush 24 to face a cavity space C; and a concave portion serving as a nozzle contact portion 29 is formed at a rear end (an upper end in FIG. 1) of the sprue bush 24. An injection nozzle of an unillustrated injection apparatus comes into contact with the nozzle contact portion 29. A sprue 26 is formed in the sprue bush 24 in such a manner that the sprue 26 extends between a front end and a rear end thereof, and the sprue 26 communicates with the die 28 and the nozzle contact portion 29, to thereby allow passage of resin, serving as a molding material, injected from the injection nozzle. The front end of the sprue 26 constitutes a gate serving as an inlet for resin to be charged into the cavity space C.

An annular flow passage 27 is formed in the front end portion of the sprue bush 24 so as to circulate a first temperature control medium such as water, oil, air, or gas (water in the present embodiment). Water is supplied from an unillustrated medium supply source to the flow passage 27 via a supply passage 30, whereby the sprue bush 24 (in particular, a front end portion (a lower end portion in FIG. 1) of the sprue bush 24) is cooled to a predetermined temperature, along with an inner stamper holder 14, which is disposed to surround a front half (a lower half in FIG. 1) of the sprue bush 24 and is adapted to press and hold an inner circumferential edge of an unillustrated stamper. The inner stamper holder 14 is engaged with and disengaged from the base plate 15 through rotation of a rod 25, which is rotatably disposed to face a rear end of the inner stamper holder 14.

Notably, the above-mentioned injection apparatus includes a heating cylinder; an injection nozzle attached to a front end of the heating cylinder; and a screw disposed in the heating cylinder in such a manner as to be able to rotate and to advance and retract.

The above-mentioned stamper is attached to the mirror-surface disc 16. Upon charging of the resin into the cavity space C, a fine pattern of pits formed on the stamper is transferred to the resin, whereby an uneven surface is formed as an information surface of the disc substrate, which is a molded product.

Moreover, an annular abutment ring 18 is disposed at an outer circumferential edge of the mirror-surface disc 16, and is attached to the base plate 15 by use of bolts b3. A first outer ring 19 of annular shape is disposed on the radially outer side of the mirror-surface disc 16 and the abutment ring 18, and is attached to the base plate 15 by use of bolts b4.

Meanwhile, reference numeral 32 denotes a movable mold assembly that is attached to an unillustrated movable platen by use of unillustrated bolts. The movable mold assembly 32 is advanced and retracted (moved vertically in FIG. 1) as the result of advancement and retraction of the movable platen, whereby the movable mold assembly 32 is brought into contact with the stationary mold assembly 12 and separated therefrom.

The movable mold assembly 32 is composed of a base plate 35; an intermediate plate 40 attached to the base plate 35 by use of bolts b5; a mirror-surface disc 36 serving as a second disc-shaped member and attached to the intermediate plate 40 by use of bolts b6; a tubular bush 47 disposed in the intermediate plate 40 and attached thereto by use of bolts b7; a tubular cut punch 48 serving as a machining member and disposed within the bush 47 via a bearing 49, which serves as an annular support member and a linear bearing portion, in such a manner that the cut punch 48 can advance and retract; an ejection pin 50 disposed within the cut punch 48 in such a manner that it can advance and retract; a cut punch block 52 disposed in the base plate 35; and an ejection rod 53 disposed in the base plate 35 to penetrate the cut punch block 52 and to be slidable with respect to the cut punch block 52. Notably, the base plate 35 and the intermediate plate 40 constitute a second support member; and the base plate 35, the intermediate plate 40, and the mirror-surface disc 36 constitute a second mold unit.

In the present embodiment, the stamper is attached to the mirror-surface disc 16. However, the stamper may be attached to the mirror-surface disc 36. In the present embodiment, the inner stamper holder 14, the mirror-surface disc 16, the sprue bush 24, etc., are disposed on the mold assembly 12; and the base plate 35, the mirror-surface disc 36, the intermediate plate 40, the bush 47, the cut punch 48, etc., are disposed on the mold assembly 3,2. However, the base plate 35, the mirror-surface disc 36, the intermediate plate 40, the bush 47, the cut punch 48, etc., may be disposed on the mold assembly 12; and the inner stamper holder 14, the mirror-surface disc 16, the sprue bush 24, etc., on the mold assembly 32.

The bush 47, is disposed in such a manner that it surrounds the cut punch 48, and its front end (an upper end in FIG. 1) faces the cavity space C. The bush 47 extends rearward (downward in FIG. 1) through the mirror-surface disc 36 and is mounted, at its flange portion f1 at the rear end (the lower end in FIG. 1), to the intermediate plate 40 by use of the bolts b7. A small clearance CL is formed between an outer circumferential surface of the bush 47 and inner circumferential surfaces of the mirror-surface disc 36 and the intermediate plate 40. Compressed air is supplied to the clearance CL, and the air is injected into the cavity space C from an air blow slit SL formed between the outer circumferential surface of the bush 47 and the inner circumferential surface of the mirror-surface disc 36 at the front end of the mold assembly 32.

The cut punch 48 is disposed in such a manner that its front end faces the cavity space C. The cut punch 48 extends rearward through the mirror-surface disc 36 and the intermediate plate 40, and its rear end flange portion f2 abuts the cut punch block 52. Therefore, upon drive of an unillustrated cut punch cylinder serving as a cut punch drive section, the cut punch block 52 can be advanced and retracted, whereby the cut punch 48 can be advanced and retracted. The front end of the cut punch 48 has a shape corresponding to that of the die 28. Upon advancement (upward movement in FIG. 1) of the cut punch 48, the front end of the cut punch 48 can be inserted into the die 28.

An annular flow passage 55 for circulating a second temperature control medium such as air or gas (air in the present embodiment) is formed in the front end portion of the bush 47 so as to surround the cut punch 48. Air is supplied from an unillustrated medium supply source to the flow passage 55, whereby the bush 47 is cooled, and the cut punch 48 (in particular, a front end portion (an upper end portion in FIG. 1) of the cut punch 48) is cooled to a predetermined temperature. Notably, water, oil, or the like may be used as the second temperature control medium.

The ejection pin 50 is disposed in such a manner that its front end faces the cavity space C. The ejection pin 50 extends rearward through the mirror-surface disc 36 and the intermediate plate 40, and its rear end abuts the ejection rod 53. Therefore, upon drive of an unillustrated ejection cylinder serving as an ejection drive section, the ejection rod 53 can be advanced and retracted, whereby the ejection pin 50 can be advanced and retracted. A spring 54 serving as an urging member is disposed to extend between the cut punch 48 and the ejection pin 50, so that the ejection pin 50 is urged rearward with a predetermined urging force.

An annular cavity ring 37 is disposed at an outer circumferential edge portion of the mirror-surface disc 36 in such a manner that the cavity ring 37 can move relative to the mirror-surface disc 36, and faces the abutment ring 18. A second outer ring 38 of an annular shape is disposed on the radially outer side of the mirror-surface disc 36 and the cavity ring 37 so as to face the first outer ring 19, and is attached to the intermediate plate 40 by use of bolts b9. The second outer ring 38 also functions as a cavity ring holder and is engaged with an outer circumferential edge of the cavity ring 37.

Guide rods 41 are attached to the cavity ring 37 and extend rearward. The cavity ring 37 can be advanced and retracted through advancement and retraction of the guide rods 41 along guide holes formed in the intermediate plate 40. The cavity ring 37 projects from a front end surface (an upper end surface in FIG. 1) of the mirror-surface disc 36, so that an outer circumferential edge of a disc substrate is formed by an inner circumferential surface of the cavity ring 37.

The cavity ring 37 has a plurality of thin vent holes 64 which are radially formed in the vicinity of a front end surface at uniform angular intervals. Moreover, the first outer ring 19 has a plurality of vent grooves 65 which are radially formed on a front end surface (a lower end surface in FIG. 1) of the first outer ring 19 at uniform angular intervals in such a manner that the vent grooves 65 communicate with the corresponding thin holes 64 (for easy understanding, in FIG. 2, the thin holes 64 are illustrated as being on the front end surface of the second outer ring 38). Notably, the thin holes 64 constitute a first gas passage, and the grooves 65 constitute a second gas passage.

The mold assemblies 12 and 32 constitute a disc-molding mold; and an unillustrated mold clamp apparatus is disposed so as to bring the mold assembly 32 into contact with the mold assembly 12 and separate the same from the mold assembly 12. The mold assembly 32 is advanced and retracted upon drive of a clamp cylinder, serving as a mold clamping drive section of the mold clamp apparatus, whereby the disc-molding mold can be closed, clamped, and opened. When the disc-molding mold is clamped, the above-mentioned cavity space C is formed between the mirror-surface discs 16 and 36. In order to enable smooth mold closing and opening, unillustrated guide rods are attached to the base plate 15 at predetermined locations in such a manner that' the guide rods project toward the mold assembly 32. Guide bushes 81 are disposed in the intermediate plate 40 and the base plate 35 at locations corresponding to the guide rods. With advancement and retraction of the mold assembly 32, the guide rods move axially with respect to the guide bushes 81. Notably, in FIG. 2, reference numeral 82 denotes a guide bush hole for accommodating the guide bush 81.

In a cooling step, the cut punch 48 is advanced through drive of the cut punch cylinder, whereby the front end of the cut punch 48 enters the die 28 so as to machine the resin within the cavity space C (punch a hole in the present embodiment). Notably, the resin within the cavity space C constitutes a prototype of a disc substrate; i.e., a substrate prototype.

The mirror-surface discs 16 and 36, the base plate 15, and the intermediate plate 40 form first and second flow passages 61 and 62 for circulating a third temperature control medium such as water, oil, air, or gas (water in the present embodiment). Water is supplied from the above-mentioned medium supply source to the first and second flow passages 61 and 62 so as to cool the mirror-surface discs 16 and 36 to a predetermined temperature.

The first flow passage 61 includes an unillustrated medium inlet opened to a predetermined location on the base plate 15; e.g., to a side surface S1, which is located at a lower side when the mold apparatus is attached to an injection molding machine; an unillustrated medium outlet which is opened to the side surface S1 adjacent to the medium inlet; unillustrated inlet-side and outlet-side auxiliary cooling portions formed within the base plate 15 so as to cool mainly the base plate 15 and connected to the medium inlet and outlet, respectively; a main cooling portion 67 formed in a predetermined pattern between the mirror-surface disc 16 and the base plate 15 so as to cool mainly the mirror-surface disc 16; and inlet-side and outlet-side connection portions for connecting the auxiliary cooling portions and the main cooling portion 67. The main cooling portion 67 is formed by covering with the base plate 15 a groove formed on a surface of the mirror-surface disc 16 in contact with the base plate 15, and constitutes a single continuous closed flow passage.

Similarly, the second flow passage 62 includes a medium inlet 72 opened to a predetermined location on the intermediate plate 40; e.g., to a side surface S11, which is located at a lower side when the disc-molding mold is attached to the injection molding machine; a medium outlet 73 which is opened to the side surface S11 adjacent to the medium inlet 72; inlet-side and outlet-side auxiliary cooling portions 74 and 75 formed within the intermediate plate 40 so as to cool mainly the intermediate plate 40 and connected to the medium inlet and outlet 72 and 73, respectively; a main cooling portion 77 formed in a predetermined pattern between the mirror-surface disc 36 and the intermediate plate 40 so as to cool mainly the mirror-surface disc 36; and inlet-side and outlet-side connection portions 78 and 79 for connecting the auxiliary cooling portions 74 and 75 to the main cooling portion 77. The main cooling portion 77 is formed by covering with the intermediate plate 40 a groove formed on a surface of the mirror-surface disc 36 in contact with the intermediate plate 40, and constitutes a single continuous closed flow passage.

The auxiliary cooling portions 74 and 75 are formed on the radially outer side of the main cooling portion 77 so as to surround the main cooling portion 77. The auxiliary cooling portions 74 and 75 have parallel flow passage portions h1 and h2 which extend straight from the medium inlet 72 and the medium outlet 73 toward the interior of the intermediate plate 40; flow passage portions h3 and h4 which extend straight and perpendicularly from distal ends of the flow passage portions h1 and h2 toward a rear-side (a non-operation-side) side surface S12 and a front-side (an operation-side) side surface S13, respectively; parallel flow passage portions h5 and h6 which extend straight and perpendicularly from distal ends of the flow passage portions h3 and h4 along respective side edges of the intermediate plate 40 toward an upper-side side surface S14; flow passage portions h7 and h8 which extend straight and perpendicularly from distal ends of the flow passage portions h5 and h6 in mutually approaching directions; and parallel flow passage portions h9 and h10 which extend straight and perpendicularly from distal ends of the flow passage portions h7 and h8 toward the connection portions 78 and 79, respectively. Notably, the auxiliary cooling portions formed in the base plate 15 have structures similar to those of the auxiliary cooling portions 74 and 75.

The main cooling portion 77 includes a plurality of portions formed concentrically and successively from the center of the intermediate plate 40 toward the radially outer side so as to extend over a predetermined angle θ; i.e., arcuate portions k1 to k4, as well as a straight portion k5 for connecting the arcuate portions k1 and k2, a straight portion k6 for connecting the arcuate portions k2 and k3, and a straight portion k7 for connecting the arcuate portions k3 and k4. The connection portion 78 is connected to the arcuate portion k1, and the connection portion 79 is connected to the arcuate portion k4. Although the main cooling portion 67 formed in the mirror-surface disc 16 has portions similar to those of the main cooling portion 77; i.e., consists of unillustrated arcuate portions and unillustrated straight portions, the number of the arcuate portions is three, and the number of the straight portions is two.

Therefore, water supplied to the interior of the intermediate plate 40 via the medium inlet 72 flows through the auxiliary cooling portion 74, and then moves to the interior of the mirror-surface disc 36 and flows through the second flow passage 62. Subsequently, the water returns to the interior of the intermediate plate 40 and flows through the auxiliary cooling portion 75, and then is discharged from the medium outlet 73.

In a metering step, the screw of the above-mentioned injection apparatus is rotated, whereby resin is melted and accumulated in front of the screw, and the screw is retracted accordingly. During this period, the disc-molding mold is closed and clamped. Subsequently, in an injection step, the screw is advanced, whereby the resin accumulated in front of the screw is injected from the injection nozzle and charged into the cavity space C. In a cooling step, the resin in the cavity space C is cooled, and hole punching is performed, whereby a disc substrate is completed. Subsequently, the mold is opened, and the disc substrate is removed.

In the injection step, the resin passes through the sprue 26 and then the gate to enter the cavity space C, and then flows radially outward within the cavity space C. Therefore, a temperature gradient is :formed in the cavity space C, whereby the temperature of the resin increases toward the gate and decreases toward the outer peripheral edge. In such a case, the degree of transfer of the pattern of the stamper increases toward the gate and decreases toward the outer peripheral edge.

In view of the above, in order to prevent over-cooling of resin in the vicinity of the outer peripheral edge of the stamper-side mirror-surface disc 16, a closed chamber 63 of a predetermined shape (annular shape in the present embodiment), which serves as a thermal insulating section, is formed on a predetermined location on the radially outer side of the first flow passage 61 (along the outer circumferential edge of the stamper). The closed chamber 63 is filled with air. Like the main cooling portion 67, the closed chamber 63 is formed by covering with the base plate 15 a groove formed on a surface of the mirror-surface disc 16 in contact with the base plate 15.

Since the closed chamber 63 filled with air has a thermal insulating property, the closed chamber 63 prevents transmission of heat from the radially inner side of the closed chamber 63 to the radially outer side thereof. Therefore, the cooling capacity realized by the first flow passage 61 of the mirror-surface disc 16 is made lower than that realized by the second flow passage 62 of the mirror-surface disc 36. Thus, on the stamper side, the quantity of heat radiated from the outer peripheral edge of the mirror-surface disc 16 to the outside of the disc-molding mold is reduced, whereby over-cooling of the mirror-surface disc 16 can be prevented. As a result, a local deterioration in the degree of transfer, which would otherwise occur in the vicinity of the outer peripheral edge of the cavity space C, can be prevented, and thus the degree of transfer of the fine pattern can be improved over the entire cavity space C. Thus, quality of disc substrates can be improved.

Since the closed chamber 63 is rendered deeper than the main cooling portion 67, the quantity of heat radiated from the outer peripheral edge of the mirror-surface disc 16 to the outside of the disc-molding mold can be further reduced, whereby over-cooling of the mirror-surface disc 16 can be prevented without fail.

Incidentally, resin having entered the cavity space C via the gate first comes into contact with the front end of the cut punch 48, whereby the front end of the cut punch 48 is easily heated, and its temperature increases. When the dimension of the cut punch 48 changes with the temperature thereof, hole punching for prototypes of disc substrates becomes inconsistent, resulting in a drop in the quality of the disc substrates.

In order to cope with such a problem, as described above, the temperature control flow passage 55 is formed in the bush 47 in the vicinity of the front end thereof; and air is supplied to the flow passage 55, whereby the bush 47 is cooled, and the cut punch 48 (in particular, the front end portion of the cut punch 48) is cooled to a predetermined temperature.

For supply of air, a first supply passage 101 is formed in the intermediate plate 40, and a second supply passage 102 is formed in the cut punch 48. After passing through the first supply passage 101, air enters the second supply passage 102 at the flange f1 of the cut punch 48, and flows through the second supply passage 102 along a cylindrical, tubular portion s1 of the cut punch 48, and is then supplied to the flow passage 55. The air supplied to the flow passage 55 flows through the flow passage 55, and then flows to an unillustrated discharge passage from a predetermined circumferential location, whereby the air is discharged· via the discharge passage. Notably, the discharge passage is formed in the flange portion f1 and the cylindrical, tubular portion s1.

In this manner, the front end portion of the cut punch 48 is cooled via the bush 47 by means of air flowing through the flow passage 55, and when the cut punch 48 enters the die 28, the cut punch 48 is sufficiently cooled via the sprue bush 24 by means of water flowing through the flow passage 27. Therefore, the temperature of the cut punch 48 can be stabilized, and thus quality of molded products can be improved.

Since a temperature control flow passage is not required to be formed in the front end portion of the cut punch 48, the diameter of the cut punch 48 at the front end portion thereof is not required to increase, whereby machining of the cut punch 48 can be simplified. Therefore, cost of the mold apparatus can be reduced.

Notably, since no temperature control flow passage is formed in the front end portion of the cut punch 48, when the cut punch 48 is advanced for hole punching, the front end portion of the cut punch 48 is located forward of the bush 47, and is not cooled by means of air in the flow passage 55.

In view of the above, the radial dimension of the flow passage 27 of the sprue bush 24 is made greater than the internal diameter of a supply passage 105, which supplies a medium from the supply passage 30 to the flow passage 27 within the sprue bush 24. Accordingly, a sufficient quantity of the medium can be supplied to the flow passage 27, and the heat capacity of the medium within the flow passage 27 can be increased, whereby the cooling capacity of the sprue bush 24 by the flow passage 27 can be increased. As a result, when the cut punch 48 is advanced, the front end thereof can be sufficiently cooled.

Incidentally, as described above, the bush 47 is disposed on the radially outer side of the cut punch 48, and the cut punch 48 is supported by the bush 47 via a bearing 49 for advancement and retraction movement relative to the bush 47. The diameter of the front end portion of the cut punch 48 can be reduced so as to enable the bearing 49 to be disposed in the vicinity of the front end of the cut punch 48, thereby shortening the distance between the front end of the cut punch 48 and the front end of the bearing 49. In the present embodiment, the bearing 49 is disposed in such a manner that its front end is located at a position adjacent to the flow passage 55 formed in the bush 47 (slightly rearward of the flow passage 55), it extends rearward, and its rear end is located at a position slightly forward of the position of the front end of the flange f1 of the bush 47.

Accordingly, the fit between the bush 47 and the cut punch 48 can be tightened over substantially the entire region of the bush 47, and thus generation of inclination of the cut punch 48 can be prevented, whereby no eccentricity is generated in each disc substrate. As a result, quality of disc substrates can be improved.

Since the second supply passage 102 and the discharge passage are formed parallel to and along the bearing 49, the bearing 49 can be cooled sufficiently by air. Accordingly, changes in dimensions of various elements of the bearing 49 such as balls 107 can be prevented, and the operation of the bearing 49 can be stabilized.

Notably, since the bearing 49 extends to the vicinity of the respective front ends of the bush 47 and the cut punch 48, unillustrated grease, which serves as a lubricant for lubricating the bearing 49, becomes likely to enter the cavity space C via a clearance between the bush 47 and the cut punch 48. In view of this, a grease discharge passage is formed at the rear end of the cut punch 48 so as to prevent entry of the grease into the cavity space C via the clearance between the bush 47 and the cut punch 48. Therefore, no grease adheres to disc substrates, and thus, quality of disc substrates can be improved.

Incidentally, in the present embodiment, the cut punch 48 is directly supported by the bush 47 via the bearing 49, and a floating punch is not disposed between the cut punch 48 and the bush 47. In view of this, the above-described clearance CL is formed, and compressed air is supplied to the clearance CL via a supply passage 109, whereby the compressed air is injected into the cavity space C from the slit SL.

In this case, unlike a floating punch, the bush 47 is not required to be advanced in such a manner that its front end is located forward of the front end surface of the mirror-surface disc 36. Accordingly, the outer diameter of a front end portion of the bush 47 can be made smaller than that of the main portion, whereby the above-mentioned slit SL can be formed between the outer circumferential surface of the bush 47 and the inner circumferential edge of the front end of the mirror-surface disc 36. Accordingly, each disc substrate can be smoothly ejected by means of injected air.

Since the heat capacity of the front end portion of the bush 47 can be reduced by an amount corresponding to a reduction in the outer diameter of the front end portion of the bush 47, the bush 47 can be cooled reliably by means of air flowing through the flow passage 55. Accordingly, the cooling capacity of the cut punch 48 by the flow passage 55 can be enhanced.

Moreover, a stepped portion 113, which the rear end of the bearing 49 abuts, is formed on an outer circumferential surface of the cut punch 48; and the cut punch 48 has a smaller outer diameter on the front side of the stepped portion 113 and a larger outer diameter on the rear side of the stepped portion 113. In contrast, a stepped portion 114, which the front end of the spring 54 abuts, is formed on an inner circumferential surface of the cut punch 48; and the cut punch 48 has a smaller inner diameter on the front side of the stepped portion 114 and a larger inner diameter on the rear side of the stepped portion 114. In the present embodiment, the bearing 49 can be disposed at a position offset toward the front end of the cut punch 48, whereby overlap between the bearing 49 and the spring 54 in the axial direction can be avoided. Accordingly, the strength of the cut punch 48 can be increased, and the size of the cut punch 48 can be reduced accordingly.

In the present embodiment, when the cut punch 48 is advanced during hole punching, the front end portion of the cut punch 48 is located frontward of the bush 47 with the result that cooling by the flow passage 55 is not performed for the front end portion. If the ejection pin 50 is advanced in this state, conceivably, the ejection pin 50 fails to push out a sprue portion which has hardened and remains within the sprue 26. In view of this, a spherical projection 111 is formed on the front end of the ejection pin 50 so as to smoothly push out the sprue portion.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be utilized in disc substrate manufacturing apparatuses for manufacturing disc substrates.

## Claims

1. A mold apparatus **characterized by** comprising:
(a) a first mold unit;
(b) a second mold unit;
(c) a sprue bush disposed in one of the first and second mold units and having a sprue for charging a molding material into a cavity space;
(d) a machining member disposed in the other of the first and second mold units in such a manner that the machining member can be advanced and retracted, the machining member performing a predetermined machining for a prototype of a molded product when the machining member is advanced; and
(e) a bush disposed radially outward of the machining member to surround the machining member and having a flow passage which is formed in a front end portion thereof and through which a temperature control medium flows.

2. A mold apparatus according to claim 1, wherein an annular flow passage through which a temperature control medium flows is formed in a front end portion of the sprue bush.

3. A mold apparatus according to claim 2, wherein the radial dimension of the flow passage of the sprue bush is greater than an inner diameter of a supply passage for supplying the temperature control medium to the flow passage of the sprue bush.

4. A mold apparatus according to claim 1, wherein the flow passage formed in the front end portion of the bush is an annular flow passage.

5. A mold apparatus according to claim 1, further comprising:
(a) a support member disposed between the machining member and the bush, wherein
(b) the support member extends rearward from a position near the flow passage formed in the front end portion of the bush.

6. A mold apparatus according to claim 5, wherein the supply passage for supplying the temperature control medium to the flow passage of the bush is formed along the support member.

7. A mold apparatus according to claim 5, wherein a discharge passage for discharging a lubricant used for lubricating the support member is formed in the machining member.

8. A molded product molded by use of a mold apparatus comprising a first mold unit; a second mold unit; a sprue bush disposed in one of the first and second mold units and having a sprue; a machining member disposed in the other of the first and second mold units in such a manner that the machining member can be advanced and retracted; and a bush disposed radially outward of the machining member to surround the machining member and having a flow passage which is formed in a front end portion thereof and through which a temperature control medium flows, the product being **characterized by** being molded through
(a) charging a molding material into a cavity space via the sprue;
(b) cooling the molding material so as to form a prototype of the molded product; and
(c) advancing the machining member so as to perform a predetermined machining on the prototype of the molded product.

9. A method of molding a product in a mold apparatus comprising a first mold unit; a second mold unit; a sprue bush disposed in one of the first and second mold units and having a sprue; a machining member disposed in the other of the first and second mold units in such a manner that the machining member can be advanced and retracted; and a bush disposed radially outward of the machining member to surround the machining member and having a flow passage which is formed in a front end portion thereof and through which a temperature control medium flows, the method being **characterized by** comprising the steps of:
(a) charging a molding material into the cavity space via the sprue;
(b) cooling the molding material so as to form a prototype of the molded product; and
(c) advancing the machining member so as to perform a predetermined machining on the prototype of the molded product.

10. A molding machine equipped with the mold apparatus as described in any one of claims 1 to 7.
